# EUROPEAN PATENT SPECIFICATION

(11) **EP 0 896 415 B1**
(45) Date of publication and mention of the grant of the patent: **13.12.2006**
(21) Application number: 98900707.5
(22) Date of filing: 21.01.1998
(51) Int. Cl.: H02K 16/02, H02K 21/24, H02K 21/20

(54) **DYNAMO-ELECTRIC MACHINE**
DYNAMOELEKTRISCHE MASCHINE
MACHINE DYNAMOELECTRIQUE

(30) Priority: 24.01.1997 JP 2581697
(43) Date of publication of application: 10.02.1999
(73) Proprietor: Ueda, Tomoaki, Osakasayama-shi Osaka, 589-0022 (JP)
(72) Inventor: Hayasaka Shigeaki, Sakai-shi, Osaka 593 (JP)
(74) Representative: Morgan, James Garnet
(86) International application number: PCT/JP1998/000250
(87) International publication number: WO 1998/033262

(56) References cited:
- GB-A- 1 571 876
- JP-A- 7 123 662
- JP-A- 57 160 357
- JP-U- 3 054 358
- US-A- 1 566 693
- US-A- 3 700 942
- US-A- 4 761 590
- PATENT ABSTRACTS OF JAPAN vol. 1997, no. 11, 28 November 1997 (1997-11-28) -& JP 09 182402 A (MATSUSHITA ELECTRIC IND CO LTD), 11 July 1997 (1997-07-11) -& DATABASE WPI Section EI, Week 9738 Derwent Publications Ltd., London, GB; Class V06, AN 1997-409716 XP002180226 & JP 09 182402 A (MATSUSHITA ELECTRIC IND CO LTD), 11 July 1997 (1997-07-11)

## Description

### FIELD OF INVENTION

The present invention relates to a rotary electric apparatus having a structure which comprises a stator and a pair of rotors disposed at both-side positions of the stator. And furthermore this invention relates to a generator and a motor respectively using the above rotary electric apparatus.

### BACKGROUND ART

Rotary electric apparatus with a central stator and a pair of rotors opposed to the ends thereof via axial air-gaps are know from GB-A-1 571 876, JP-A-57 160 357, and many other documents. However in these documents the magnetic poles of each rotor are arranged to have alternating N and S polarities around them.

The applicant of the present invention had previously proposed a generator having a structure shown in Figs 12 and 13 as per the Laid-Open Japanese Patent Publication No. JP-A-7 123 662.

The above-referred generator comprises a pair of rotors 92N and 92S which are integrally secured onto a rotary shaft 90, being spaced at a certain distance, and a stator 91 being disposed by way of surrounding external periphery of the rotors 92N and 92S.

The rotor 92N has N-polar magnetic poles 93a and 93b at diagonal positions of external periphery. The other rotor 92S has S-polar magnetic poles 94a and 94b at diagonal positions of external periphery. These magnetic poles are respectively formed outwardly.

The above-referred stator 91 has 4 cores 95a ∼ 95d disposed in a circle around external periphery of the rotors 92N and 92S wherein coils 96a ∼ 96d are respectively disposed at lengthwise center portions of the cores 95a ∼ 95d. Winding direction of the coils 96a ∼ 96d is arranged in such a manner in which, if the coils 96a and 96c disposed at diagonal positions were wound in the clockwise direction, then the coils 96b and 96d disposed at the other diagonal positions are wound in the counterclockwise direction.

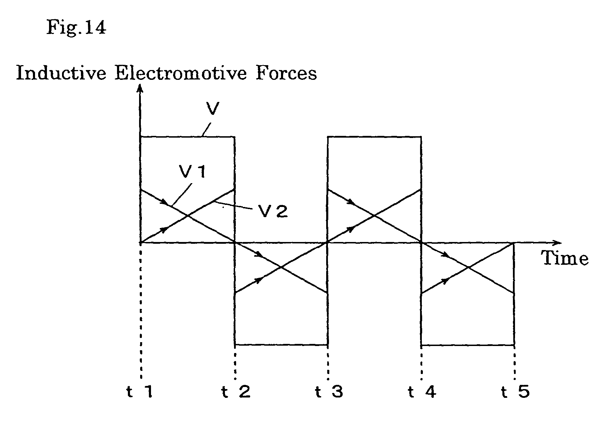

When the rotors 92N and 92S are rotated by delivering rotating force to a rotary shaft 90 of the above-referred generator, as shown in Fig. 14 for example, sawtooth shaped inductive electromotive force V1 is generated from the coils 96a and 96c disposed at one of the diagonal positions, whereas similar inductive electromotive force V2 having lagged phase is generated from the coils 96b and 96d disposed at the other diagonal positions. By way of synthesizing inductive electromotive forces V1 and V2 generated in the coils 96a ∼96d, rectangular output power V is generated, and yet, by way of shaping waveform of the output power V, direct-current output power is generated.

Nevertheless, according to the structure of the above-referred generator, inasmuch as the rotors 92N and 92S are opposed to the stator 91 in diametric direction of the shaft 90, the cores 95a ~ 95d of the stator 91 and the magnetic poles 93a /93b of the rotor 92N and the poles 94a / 94b of the rotor 92S are respectively formed with curved surface, not only much labor/time is needed for the manufacturing process, but magnetic flux from the magnetic poles 93a, 93b, 94a, and 94b are also unevenly distributed to cause the generated output power V to be distorted, thus raising problem.

In order to provide greater magnetic flux for the magnetic poles 93a, 93b, 94a, and 94b, it is essential that lengthy permanent magnets be used in the axial direction, but it in turn causes size of the generator to be expanded further. Consequently, this results in the extended total length of magnetic path to cause iron loss and leakage flux to be increased to adversely affect operating efficiency, thus raising problem as well.

The invention has been achieved to solve the above problems. An object of the invention is to provide a compact rotary electric apparatus capable of fully solving the above problems affecting manufacturing process and operating characteristic via introduction of a structure in which a pair of rotors are disposed at both-sides of a stator. It is also an object of the invention to provide a generator and a motor respectively using the rotary electric apparatus embodied by the invention.

### DISCLOSURE OF THE INVENTION

The invention provides a rotary electric apparatus according to claim 1.

According to the above structure disclosed in claim 1, by virtue of provision of a pair of rotors at both-side positions of the stator and arrangement of the magnetic poles of respective rotors by way of being opposed to respective magnetic-pole portions of the cores of the stator in the axial direction, the magnetic poles of respective rotors can be formed with flat surfaces, thus making it possible to readily even out magnetic flux. Further, inasmuch as the length of the stator is contracted in the axial direction, total length of magnetic path is also contracted to result in the decreased iron loss and leakage flux.

The invention according to Claim 2 provides a generator comprising the rotary electric apparatus according to Claim 1. In the generator, the coils of the stator generate sawtooth shaped inductive electromotive forces by rotation of the rotors when the shaft is driven by rotating force, and the inductive electromotive forces generated by respective coils are synthesized and to be delivered as generated output.

According to the generator based on the above structure, whenever rotating force is transmitted from external source, sawtooth shaped inductive electromagnetic force is generated from respective coils of the stator. In this case, magnetic flux from the magnetic poles of respective rotors is evenly generated, inductive electromotive force from respective coils is not subject to distortion, thus making it possible to provide stable output power.

The invention according to Claim 3 provides a motor comprising the rotary electric apparatus according to Claim 1. In the motor, the rotary shaft is rotated by repulsive force and absorptive force which are simultaneously generated between the magnetic-pole portions at both ends of the cores on the stator and the magnetic poles of respective rotors, by flowing current through respective coils, with the direction of current being reversed alternately.

According to the motor based on the above structure, when flowing current through respective coils with reversing the direction of current alternately, repulsive force and absorptive force are simultaneously generated between magnetic-pole portions at both ends of respective cores and respective magnetic poles of the rotors to enable the rotary shaft to be rotated. In this case, since magnetic flux from the magnetic poles of respective rotors is evenly held, the rotors can be rotated smoothly.

The invention according to Claim 4 provides a motor based on another aspect of the above structure, in which each magnetic-pole portion of the cores on the stator are so formed that both ends of the portion take different shapes to cause magnetic flux generated by said magnetic pole portion to distribute asymmetrically against center line thereof. Accordingly, distribution of magnetic flux generated by each magnetic-pole portion is asymmetrically effected against the center line thereof, thus enabling the motor to effect self-activation at the start-up moment.

### BRIEF DESCRIPTION OF THE DRAWINGS

Fig. 1 is a front view showing external appearance of a generator representing an embodiment of the invention;
Fig. 2 is a lateral view showing external appearance of the generator shown in Fig. 1;
Fig. 3 is a cross-sectional view along the line I - I shown in Fig. 2;
Fig. 4 is a lateral view showing external appearance of a rotor.
Fig. 5 is a perspective view showing external appearance of a coiled portion of a core;
Fig. 6 is illustration showing arrangement of magnetic-pole portions of a stator;
Fig. 7 is illustration showing a method of connecting coils;
Fig. 8 is illustration showing the principle of a generator;
Fig. 9 is illustration showing the principle of a motor;
Fig. 10 is an electrical wiring diagram showing structure of a drive-control circuit;
Fig. 11 is a time-chart representing operation of a motor;

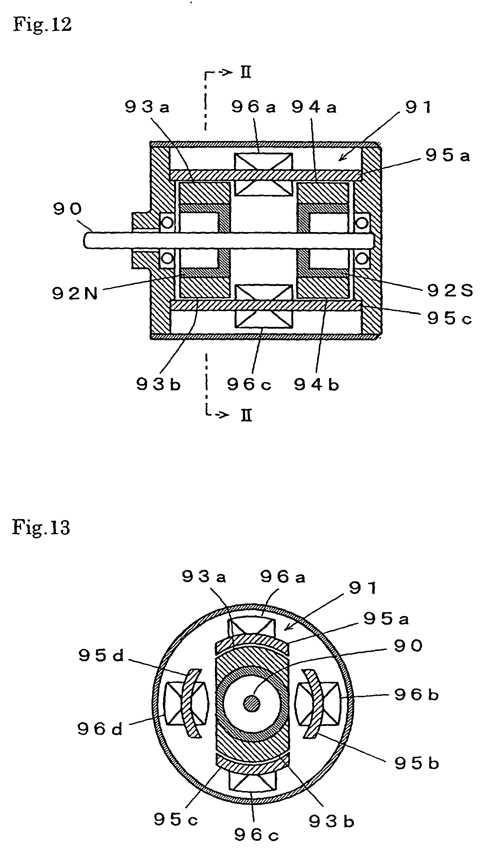

Fig. 12 is a cross-sectional view showing structure of a conventional motor;
Fig. 13 is a cross-sectional view along the line II-II shown in Fig. 12; and
Fig. 14 is illustration showing inductive electromotive force of a coil.

### THE BEST FORM FOR EMBODYING THE INVENTION

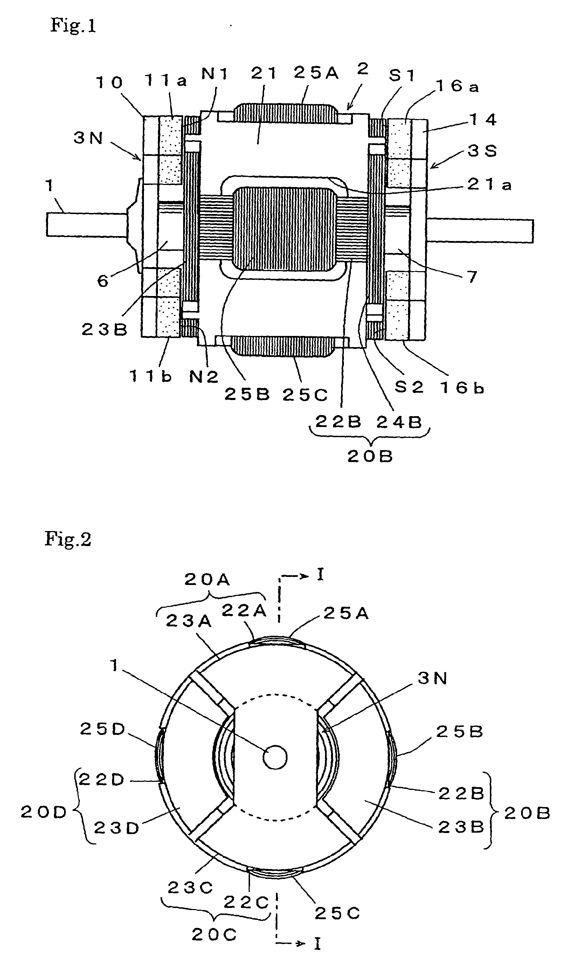

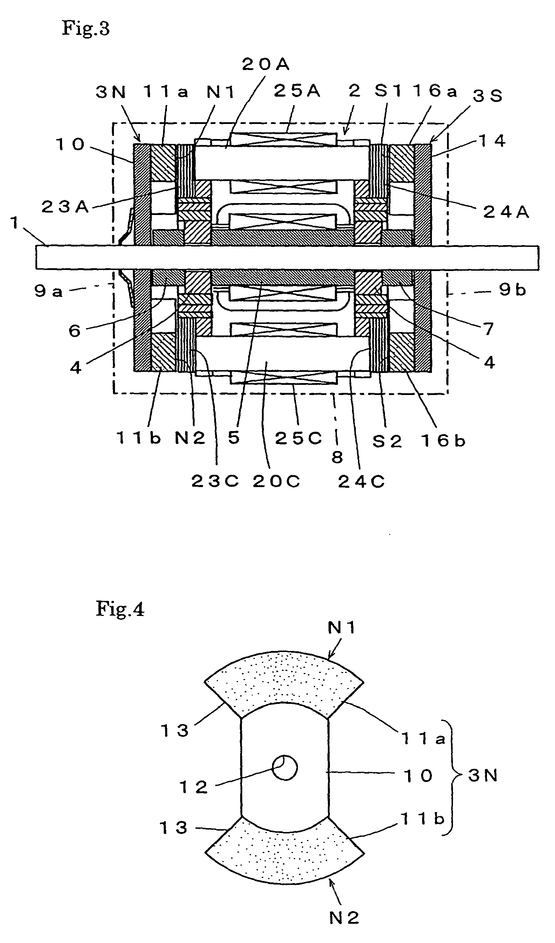

Fig. 1 through Fig. 3 respectively designate structure of a generator representing an embodiment of the present invention. Fig. 1 and Fig. 2 respectively designate external appearance of the generator, whereas Fig. 3 designates structure of the generator.

The generator exemplified therein comprises a rotary shaft 1, a stator 2 being disposed by way of surrounding external periphery of the shaft 1 and a pair of rotors 3N and 3S integrally being secured to the shaft 1 at both-side positions of the stator 2.

The stator 2 supports the shaft 1 via a pair of bearings 4 and 4. A spacer 5 for providing space between the bearings 4 and 4 is set inside of the stator 2, whereas spacers 6 and 7 for providing air-gap are respectively inserted in the shaft 1 between the stator 2 and the rotors 3N / 3S.

As shown in Fig. 3, the stator 2 and the rotors 3N / 3S are respectively accommodated in a cylindrical case 8. Apertures at both ends of the cylindrical case 8 are respectively covered with plates 9a and 9b, and the both-ends of the shaft 1 externally project themselves from the plates 9a and 9b.

As shown in Fig. 4, the rotor 3N comprises a rotor piece 10 made from magnetic metallic material and a pair of permanent magnets 11a and 11b respectively being adhered to the piece 10.

Said rotor piece 10 comprises a shaft hole 12 for accommodating the shaft 1 therein formed in the center position thereof, and fan-shaped base portions 13 and 13 needed for adhesion of the magnets 11a and 11b thereto which are formed at diagonal positions of external periphery of the piece 10.

Said magnets 11a and 11b are formed in such a fan-shape having substantially 90 degrees of angle along external shape of the base portions 13 and 13. Outer flat surfaces of the magnets 11a and 11b are respectively formed into N-polar magnetic poles N1 and N2.

In the same way as the first rotor 3N, the second rotor 3S comprises a rotor piece 14 and a pair of permanent magnets 16a and 16b being adhered to respective base portions on external peripheral surfaces of the piece 14, in which outer flat surfaces of the magnets 16a and 16b are respectively formed into S-polar magnetic poles S1 and S2.

The rotors 3N and 3S are integrally secured onto the rotary shaft 1 in order that the magnetic poles N1 and N2 of the rotor 3N can be opposed to the magnetic poles S1 and S2 of the rotor 3S across the stator 2.

Said stator 2 comprises 4 cores 20A ~ 20D and a non-magnetic supporting frame 21 for supporting these cores 20A ∼ 20D at equally spaced at 90 degree apart.

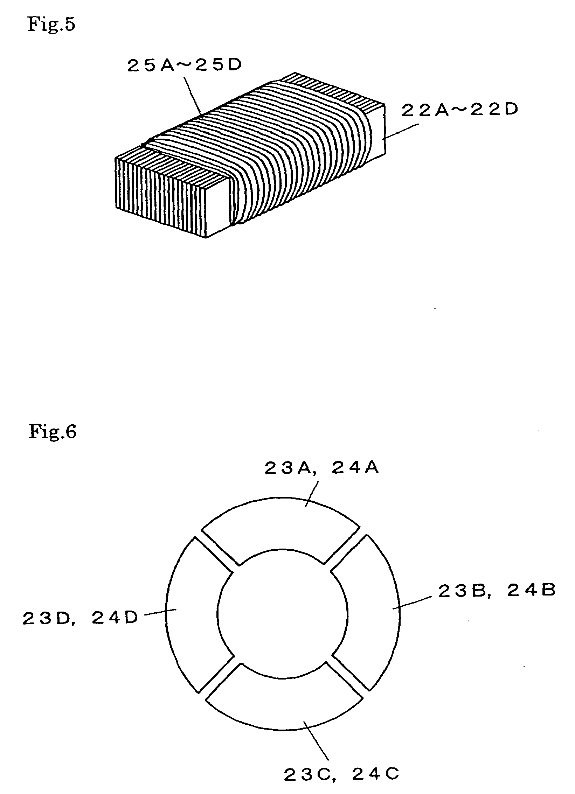

The cores 20A ∼ 20D are respectively comprise square-shaft-shaped coil portions 22A ~ 22D being composed of laminated rectangular silicon steel plates, and magnetic-pole portions 23A ~ 23D and 24A ~ 24D which are coupled on both-end surfaces of the coil portions 22A-24D respectively. The magnetic-pole portions 23A ∼ 23D and 24A ~ 24D are respectively formed via lamination of substantially 90-degree fan-shaped silicon steel plates. The coiled portions 22A ∼ 22D are respectively inserted in 4 slits 21a formed in external peripheral portions of the frame 21. As shown in Fig. 5, coils 25A ∼ 25D are wound in the axial peripheral direction on the external periphery of respective coiled portions 22A ∼ 22D.

As shown in Fig. 6, the magnetic-pole portions 23A ~ 23D and 24A ∼ 24D at both ends of respective cores 20A ~ 20D are formed into fan-shape substantially being similar to the shape of the magnets 11a and 11b of the rotor 3N and the magnets 16a and 16b of the rotor 3S. The magnetic-pole portions 23A ∼ 23D and 24A ∼ 24D are respectively disposed on the both-end surfaces of the frame 21. The magnetic-pole portions 23A ~ 23D on one end are respectively opposed to the magnetic poles N1 and N2 of the rotor 3N across minimal air-gap, whereas the magnetic-polar portions 24A ∼ 24D on other end are respectively opposed to the magnetic poles S1 and S2 of the rotor 3S across minimal air-gap.

Winding direction of the coils 25A ~ 25D is arranged to be as follows. If the coils 25A and 25C present at one of diagonal positions were subject to clockwise winding, then the coils 25B and 25D at the other diagonal position are subject to counter-clockwise winding.

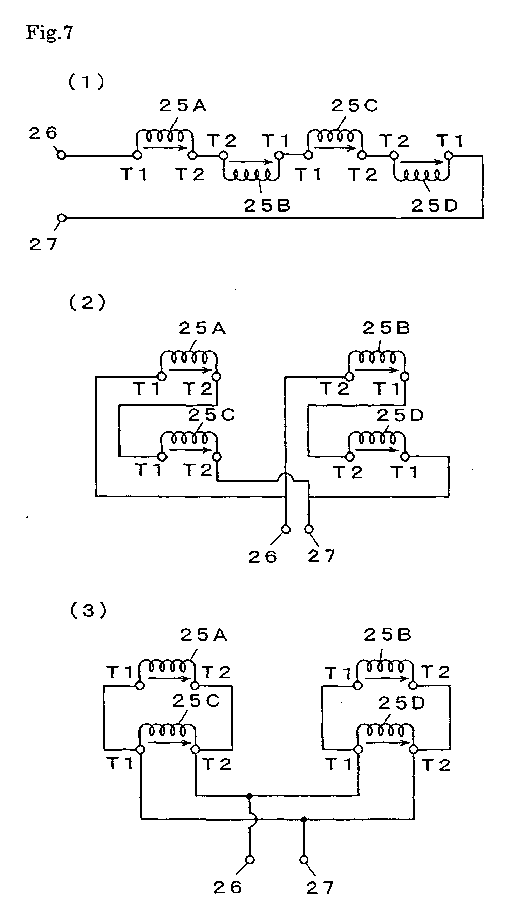

As shown in Fig. 7(1), the exemplified coils 25A ∼ 25D are connected to each other in series in order to add up the inductive electromotive forces from the coils and output the added inductive electromotive force. However, not only the serial connection suited for high-voltage output, but parallel connection suited for output of high current shown in Fig. 7(2) and serial-parallel connection via combination of the serial connection and the parallel connection shown in Fig. 7(3) may also be introduced.

The reference numerals T1 and T2 shown in Fig. 7 designate the initial point of winding of the coils 25A ∼ 25D, and the ending point of winding of these coils 25A ~ 25D respectively, whereas the reference numerals 26 and 27 respectively designate output terminals.

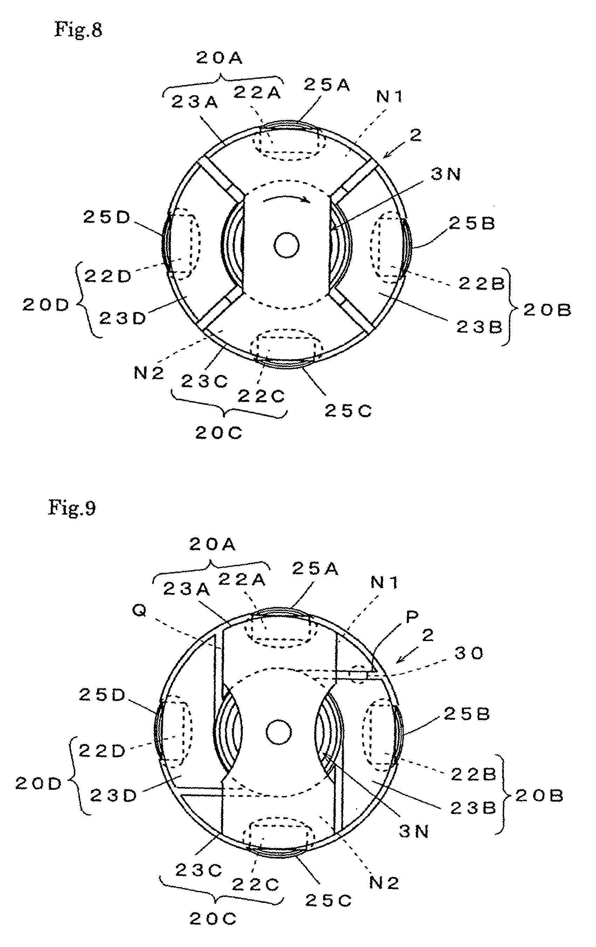

Fig. 8 shows the principle of the generator based on the above-described structure. Referring now to Fig. 8 and Fig. 14, principle of the operation of this generator is described below.

At the moment at which time-t1 shown in Fig. 14 is present, as shown in Fig. 8, the N-polar magnetic poles N 1 and N2 of the rotor 3N are opposed to the magnetic-pole portions 23A and 23C being at one of diagonal positions of the stator 2. Whereas the S-polar magnetic poles S 1 and S2 of the rotor 3S, although not being shown, are opposed to the magnetic-pole portions 24A and 24C being at one of the diagonal positions of the stator 2.

When the above condition is present, as shown in Fig. 3, two magnetic path are formed between the rotor 3N, 3S. First path is ranged from the magnetic pole N1 of the rotor 3N up to the magnetic pole S1 of the rotor S3 via air-gap, the magnetic-pole portion 23A, the core 20A, the magnetic-pole portion 24A, and air-gap. And second path is ranged from the magnetic pole N2 of the rotor 3N to the magnetic pole S2 of the rotor 3S via air-gap, the magnetic-pole portion 23C, the core 20C, and the magnetic pole portion 24C. Magnetic flux flowing through the first path is in interlinkage state with the coil 25A wound on the core 20A, whereas magnetic flux flowing through the second path is interlinkage state with the coil 25C wound on the core 20C.

When the shaft 1 is driven by rotating force, and the rotors 3N and 3S are integrally rotated with the shaft 1 in the direction shown by the arrow in Fig. 8, the magnetic poles N1 and N2 of the rotor 3N respectively depart from the magnetic-pole portions 23A and 23C of the stator 2, and the magnetic poles S1 and S2 of the rotor 3S also depart from the magnetic-pole portions 24A and 24C of the stator 2. Accordingly, the number of magnetic flux in interlinkage state with the coils 25A / 25C gradually decreases to result in the generation of inductive electromotive force V1 for deterring the decrease of the number of magnetic flux in accordance with the right-handed screw rule. The inductive electromotive force V1 diminishes relative to the decrease of the number of magnetic flux in interlinkage state.

On the other hand, as a result of the rotation of the rotors 3N and 3S, the magnetic poles N1 and N2 of the rotor 3N respectively approach the magnetic-pole portions 23B and 23D of the stator 2, whereas the magnetic poles S1 and S2 of the rotor 3S respectively approach the magnetic-pole portions 24B and 24D. This in turn causes the number of magnetic flux in interlinkage state with the coils 25B / 25D to be increased to result in the generation of inductive electromotive force V2 for deterring the increase of the number of magnetic flux in accordance with the right-handed screw rule. The inductive electromotive force V2 grows relative to the increase of the number of magnetic flux in interlinkage state.

The time t2 shown in Fig. 14 represents the moment at which the rotors 3N and 3S have respectively rotated themselves by 90 degrees. The magnetic poles N1 and N2 of the rotor 3N are opposed to the magnetic-pole portions 23B and 23D of the stator 2, whereas the magnetic poles S1 and S2 of the other rotor 3S are opposed to the magnetic-pole portions 24B and 24D of the stator 2. When the above condition is present, inductive electromotive force 1 of the coils 25A and 25C is reduced to zero, whereas inductive electromotive force V2 of the coils 25B and 25D is maximized.

The time t3, t4, and t5 shown in Fig. 14 respectively represent the moments at which rotative angles of the rotors 3N and 3S have respectively reached 180 degrees, 270 degrees, and 360 degrees. Principle of generation of inductive electromotive force V1 and V2 from the time t2 on is identical to that has been described above, and thus, description related thereto is deleted.

The inductive electromotive force V1 and V2 generated in the coils 25A ∼ 25D are varied into sawtooth shaped waves in correspondence with rotation of the rotors 3N and 3S. Rectangular output power V by synthesizing the inductive electromotive force V1 and V2 generated in the coils 25A ∼ 25D is eventually output from said terminals 26 and 27.

The generator according to the above embodiment is usable for an electric motor. Fig. 9 exemplifies the structure and principle of the motor.

The motor exemplified in Fig. 9 differs from the above-described generator in the shape of the magnetic poles N1, N2, S1, and S2 provided for the rotors 3N and 3S and also the shape of the magnetic-pole portions 23A ∼ 23D and 24A ∼ 24D provided for the stator 2. In addition, the exemplified motor is different from the above generator in that a sensor 30 has been disposed near the rotor 3N. Except for this arrangement, other structural details of the motor are identical to that of the above generator, and thus, by way of referring to corresponding structures via identical reference numerals, detailed description thereof is deleted.

As shown in Fig. 9, the magnetic poles N1, N2, S1, and S2 provided for the rotors 3N and 3S are symmetrical against the center line thereof, with shapes of above and below ends being similarly-shaped and edges being formed in parallel with each other. Conversely, as regards the stator 2, each of the respective magnetic pole portions 23A ∼ 23D and 24A ∼ 24D is so formed that both ends of the portion take different shapes, in order that distribution of magnetic flux can be effected asymmetrically against the center line thereof, thus enabling the stator 2 to effect self-activation at the start-up moment.

The magnetic-pole portions 23A ∼ 23D and 24A ∼ 24D shown in Fig. 9 are respectively formed in order that one end-edge P and the other end-edge Q are on rectangular directions. However, so far as magnetic flux can be distributed asymmetrically against the center line, the other forms except Fig. 9 can be accepted.

In order to detect rotational angular positions of the rotors 3N and 3S, the sensor 30 is disposed at the boundary position between the magnetic-pole portions 23A and 23B of the stator 2 and nearby the rotor 3N. A magnetic sensor is used for the sensor 30, however, a photoelectric sensor or a proximity switch may also be used. Furthermore the present embodiment shown in Fig. 9 detects the rotational angular positions of the rotors 3N and 3S using a single unit of the sensor 30, but it is also permissible for this embodiment to use a plurality of position-detecting sensors.

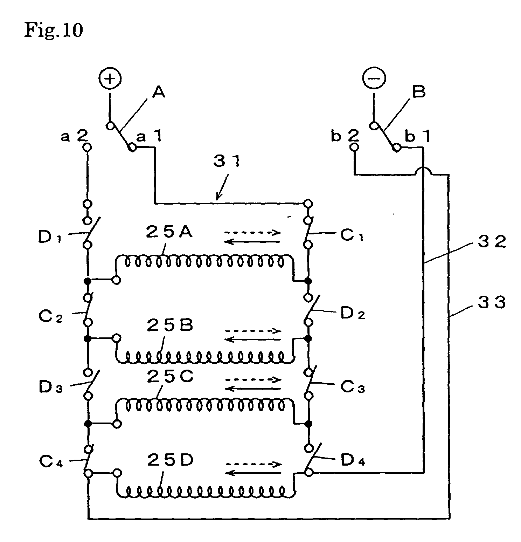

Fig. 10 shows the structure of a drive control circuit 31 for driving the motor by properly feeding current to the said coils 25A ~ 25D of the stator 2.

The reference characters A and B shown in Fig. 10 respectively designate change-over switches, each having a pair of circuit-changing contacts a1/a2 and b1/b2, whereas C1 ~ C4 and D1 ~ D4 respectively designate keying switches.

The change-over switches A and B and the keying switches C1 ∼C4 and D1 ~ D4 respectively execute switching operation and keying operation in linkage with each other. Concretely, when the switches A and B respectively lead to the contacts a1/b1 to cause the switches C1 ~ C4 to be closed and the switches D1 ~ D4 to be open, the first power-feeding circuit 32 becomes conductive to feed current to the coils 25A ∼ 25D in the direction shown by the solid line arrow.

Whereas the switches A and B respectively lead to the contacts a2/b2 to cause the switches D1 ~ D4 to be closed and the switches C1 ~ C4 to be open, the second power-feeding circuit 33 becomes conductive to feed current to the coils 25A ∼ 25D in the direction shown by the dotted line arrow.

Said change-over switches A and B and the key switches C1 ~ C4 and D1 ~ D4 respectively execute circuit-changing operation and keying operation based on position-detect signal output from the sensor 30. When executing a concrete embodiment, the above-referred switches A, B, C1 ~ C4, and D1 ~ D4 are respectively composed of a semiconductor switch such as a transistor for example.

When power is fed to the coils 25A ∼ 25D, the magnetic-pole portions 23A ~ 23D and 24A ~ 24D at both ends of the cores 20A ∼ 20D wound with the coils 25A ~ 25D are respectively magnetized into either of the polarities N and S.

Assume that the magnetic-pole portion 23A among the magnetic-pole portions 23A ∼ 23D on the side of the rotor 3N is magnetized into polarity N for example, the following magnetic-pole portion 23B is magnetized into polaity S, and then the following magnetic-pole portion 23C is magnetized into polarity N to cause the following magnetic-pole portion 23D to be magnetized into polarity S. When the magnetic-pole portion 23A has been magnetized into polarity N, the magnetic-pole portion 24A among the magnetic-pole portions 24A ~ 24D on the side of the rotor 3S is magnetized into polaity S to cause the following magnetic-pole portion 24B to be magnetized into polarity N, the following magnetic-pole portion 24C to be magnetized into polarity S, and the following magnetic-pole portion 24D to be magnetized into polarity N. Whenever the switches A, B, C1 ~ C4 and D1 ~ D4 are respectively operated, direction of feeding power to the coils 25A ~ 25D is reversed, and thus, polarities of the magnetic-pole portions 23A ∼ 23D and 24A ~ 24D are respectively reversed.

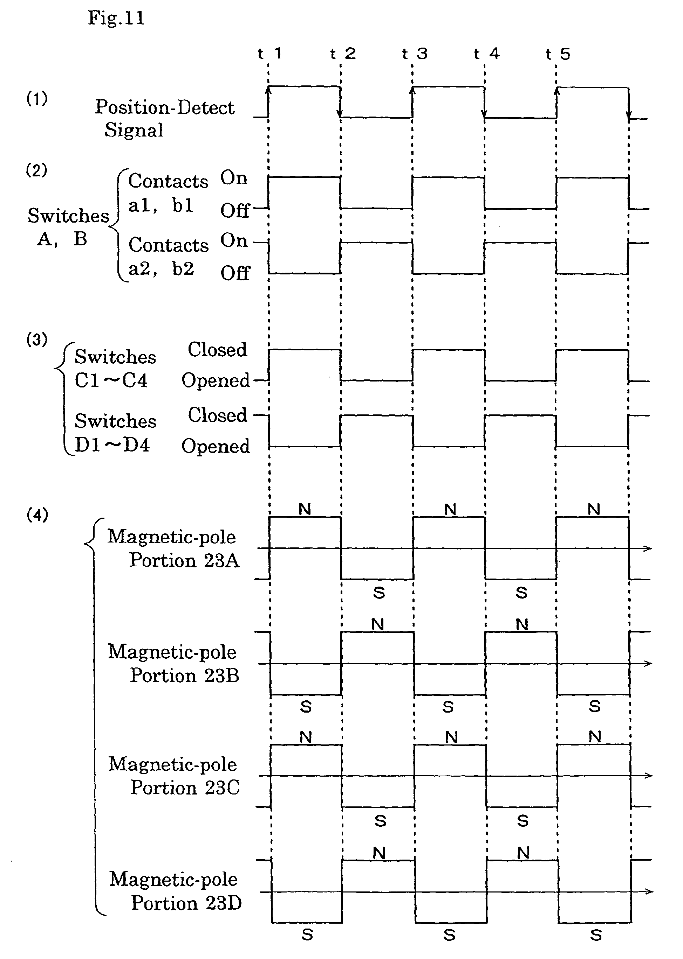

Fig. 11 represents a time-chart designating principle of the operation of the above-described motor. Referring now to Fig. 9 ~ Fig. 11, operation of the above-referred motor is described below.

As shown in Fig. 9, at the time t1 shown in Fig. 11, the N-polar magnetic poles N1 and N2 of the rotor 3N are respectively opposed to the magnetic-pole portions 23A and 23C of the stator 2, whereas the S-polar magnetic poles S1 and S2 are respectively opposed to the magnetic-pole portions 24A and 24C.

When the above condition is present, the sensor 30 is sensitized by the magnetic pole N1 of the first rotor 3N to cause a position-detect signal to rise up as shown in Fig. 11(1). In response to the rise of the signal, the change-over switches A and B respectively operate and lead to the contacts a1 and b1 as shown in Fig. 11(2). Simultaneously, the switches C1 ~ C4 are closed to cause the switches D1 ~ D4 to be opened as shown in Fig. 11(3) to cause the first power-feeding circuit 32 to become conductive to enable the coils 25A ~ 25D to receive power. Accordingly, the magnetic-pole portion 23A of the rotor 3N is magnetized into polarity N to cause the magnetic-pole portion 23B to be magnetized into polarity S, the magnetic portion 23C to be magnetized into polarity N, and the magnetic-pole portion 23D to be magnetized into polarity S as shown in Fig. 11(4). Although there is no illustration on the magnetic-pole portions 24A ~ 24D of the rotor 3S, it should be understood that the magnetic-pole portion 24A is magnetized into polarity S, the magnetic-pole portion 24B is magnetized into polarity N, the magnetic-pole portion 24C is magnetized into polarity S, and the magnetic-pole portion 24D is magnetized into polarity N, respectively.

As a result of the above operation to alternately magnetize the magnetic-pole portions 23A ~ 23D and 24A ~ 24D of the stator 2 into polarities N and S, on the part of the first rotor 3N, repulsive force generates between the N-polar magnetic poles N1 / N2 and the magnetic-pole portions 23A / 23C being magnetized into polarity N, and in addition, absorptive force generates between the N-polar magnetic poles N1 / N2 and the magnetic-pole portions 23B and 23D being magnetized into polarity S. Likewise, on the part of the second rotor 3S, repulsive force generates between the S-polar magnetic poles S1 / S2 and the magnetic-pole portions 24A and 24C being magnetized into polarity S, and in addition, absorptive force generates between the S-polar magnetic poles S1 / S2 and the magnetic-pole portions 24B and 24D being magnetized into polarity N. Because of the effect of electromagnetic force, both rotors 3N and 3S are respectively rotated.

Time t2 shown in Fig. 11(1) designates the moment at which the above-referred rotors 3N and 3S have respectively turned themselves by 90 degrees. The magnetic poles N1 and N2 of the rotor 3N are opposed to the magnetic-pole portions 23B and 23D of the stator 2, whereas the magnetic poles S1 and S2 of the rotor 3S are respectively opposed to the magnetic-pole portions 24B and 24D of the stator 2.

When the time t2 has been reached, said sensor 30 is no longer sensitive to the magnetic pole N1 of the first rotor 3N to cause the position-detect signal to fall as shown in Fig. 11(1). In response to the fall of the position-detect signal, the switches A and B respectively operate and lead to the contacts a2 and b2 as shown in Fig. 11(2) to cause the switches D1 ~ D4 to be closed and the switches C1 ~ C4 to be opened simultaneously as shown in Fig. 11(3). This in turn causes the second power-feeding circuit 33 to become conductive to cause power to flow through the coils 25A ∼ 25D in the inverse direction. Consequently, the magnetic-pole portion 23A of the rotor 3N is magnetized into polarity S to cause the magnetic-pole portion 23B to be magnetized into polarity N, the magnetic-pole portion 23C to be magnetized into polarity S, and the magnetic-pole portion 23D to be magnetized into polarity N as shown in Fig. 11(4). And there is no illustration on the magnetic-pole portions 24A ∼ 24D of the rotor 3S, it should be understood that the magnetic-pole portion 24A is magnetized into polarity N, the magnetic-pole portion 24B is magnetized into polarity S, the magnetic-pole portion 24C is magnetized into polarity N, and the magnetic-pole portion 24D is magnetized into polarity S.

As described above, the polarities of the magnetic-pole portions 23A ∼ 23D and 24A ~ 24D of the stator 2 are respectively reversed from N to S, or S to N. Accordingly, on the part of the rotor 3N, repulsive force generates between the N-polar magnetic poles N1 / N2 and the magnetic-pole portions 23B / 23D being magnetized into polarity N, whereas absorptive force generates between the N-polar magnetic poles N1 / N2 and the magnetic-pole portions 23A / 23C being magnetized into polarity S. On the part of the rotor 3S, repulsive force generates between the S-polar magnetic poles S1 / S2 and the magnetic-pole portions 24B / 24D being magnetized into polarity S, whereas absorptive force generates between the S-polar magnetic poles S1 / S2 and the magnetic-pole portions 24A / 24C being magnetized into polarity N. Because of the effect of electromagnetic force, the rotors 3N and 3S are respectively subject to continuous rotation.

Time t3, t4, and t5 shown in Fig. 11 respectively designate the moment at which the rotors 3N and 3S have respectively rotated themselves by 180 degrees, 270 degrees, and 360 degrees. Principle of the generation of rotating force from time t2 on is identical to that has been described above, and thus, description related thereto is deleted.

Therefore, by feeding power to the coils 25A ∼ 25D with switching the direction of current by turns, electromagnetic force continuously acts on the rotors 3N and 3S to enable the shaft 1 to continue own rotation.

In the above-described embodiments, each of the rotors 3N and 3S is provided with a pair of magnetic poles, whereas the stator 2 is provided with 4 of the cores. It should be understood however that the number of magnetic poles of each of the rotors 3N and 3S may also be increased to 3 or 4 or more without solely limiting to a pair of them. In this case, the stator 2 should be provided with a certain number of cores that corresponds to double number of the magnetic poles.

### INDUSTRIAL APPLICABILITY

As has fully been described above, by way of disposing a pair of rotors 3N and 3S at both-side positions of the stator 2 and arranging the magnetic-poles N1/N2 of the rotor 3N and S1/S2 of the rotor 3S to be oppossed to respective magnetic-pole portions 23A ~23D and 24A ∼ 24D of the cores of the stator 2 in the axial direction, the magnetic poles N1/N2 of the rotor 3N and S1/S2 of the rotor 3S can be formed with flat surfaces to easily even out magnetic flux. Further, inasmuch as the stator 2 can be contracted in the axial direction, total length of magnetic path is also contracted to result in the decreased iron loss and leakage flux.

By virtue of the above structural advantage, the invention has made it possible to easily manufacture a compact rotary electric apparatus incorporating improved operating characteristic. By way of applying the inventive rotary electric apparatus to a generator, stable output power without distortion of inductive electromotive force per coil can be secured. Further, by way of utilizing the inventive rotary electric apparatus for a motor, a compact motor enabling smooth rotation of rotors can be offered for use.

## Claims

1. A rotary electric apparatus comprising
a rotary shaft (1);
a stator (2) disposed by way of surrounding the external periphery of said rotary shaft (1); and
a pair of rotors (3N, 3S) integrally disposed onto said rotary shaft (1) at both-side positions of said stator (2),
wherein
one of said rotors comprises a plurality of poles (N1, N2) facing the stator (2), all of which are N-polar magnetic poles, and the other rotor comprises the same number of poles (S1, S2) facing the stator (2), all of which are S-polar magnetic poles,
said N and S magnetic poles (N1, N2; S1, S2) of the rotors (3N, 3S) are respectively disposed at equal angles;
said stator (2) comprises a certain number of cores (20A~20D) that corresponds to double the number of said magnetic poles (N1, N2 or S1, S2) of each rotor (3N or 3S), magnetic-pole portions (23A~23D; 24A~24D) formed at both ends of respective cores (20A~20D); and coils (25A~25D) wound on respective cores (20A~20D),; and
said magnetic-pole portions (23A~23D; 24A~24D) at both ends of the respective stator cores (20A~20D) are respectively disposed at equal angles in the state of being opposed to said respective magnetic poles (N1, N2; S1, S2) of the rotors (3N, 3S) via respective air-gaps,
**characterized in that**
said N- and S-polar magnetic poles (N1, N2; S1, S2) of the rotors (3N, 3S) are opposed to each other in the axial direction across said stator (2).

2. A generator comprising the rotary electric apparatus according to Claim 1, in which respective coils (25A~25D) of said stator (2) generate sawtooth shaped inductive electromotive forces by rotation of said rotors (3N, 3S) when said rotary shaft (1) is driven by rotating force, and said inductive electromotive forces generated by respective coils (25A~25D) are synthesized to be externally delivered as generated output.

3. A motor comprising the rotary electric apparatus according to Claim 1, in which said rotary shaft (1) is rotated by repulsive force and absorptive force which are simultaneously generated between said magnetic-pole portions (23A~23D; 24A~24D) at both ends of said cores (20A~20D) on the stator (2) and respective magnetic poles (N1, N2: S1, S2) of the rotors (3N, 3S), by flowing current through respective coils (25A~25D), with the direction of current being reversed alternately.

4. A motor according to Claim 3, wherein each magnetic-pole portion (23A~23D; 24A~24D) of said respective cores (20A~20D) on the stator (2) is so formed that both ends of the portion take different shapes to cause magnetic flux generated by said magnetic-pole portion (23A~23D; 24A~24D) to distribute asymmetrically against center line thereof.

## Patentansprüche

1. Elektrische Drehvorrichtung, die umfasst
eine Drehwelle (1);
einen Stator (2), der den äußeren Umfang der Drehwelle (1) umgebend angeordnet ist; und
ein Paar von Rotoren (3N, 3S), die auf beidseitigen Positionen des Stators (2) einstückig auf der Drehwelle (1) angeordnet sind;
wobei
einer der Rotoren mehrere dem Stator (2) zugewandte Pole (N1, N2) umfasst, welche alle magnetische N-Pole sind, und der andere Rotor die gleiche Anzahl von dem Stator (2) zugewandten Polen (S1, S2) umfasst, die alle magnetische S-Pole sind,
die magnetischen N- und S-Pole (N1, N2; S1, S2) der Rotoren (3N, 3S) jeweils bei gleichen Winkeln angeordnet sind;
der Stator (2) eine bestimmte Anzahl von Kernen (20A - 20D), die dem doppelten der Anzahl der magnetischen Pole (N 1, N2 oder S1, S2) jedes Rotors entspricht, Magnetpolabschnitte (23A - 23D; 24A - 24D), die an beiden Enden der jeweiligen Kerne (20A - 20D) ausgebildet sind, und Spulen (25A - 25D) umfasst, die um die jeweiligen Kerne (20A - 20D) gewickelt sind; und
die Magnetpolabschnitte (23A - 23D; 24A - 24D) an beiden Enden der jeweiligen Statorkerne (20A - 20D) jeweils bei gleichen Winkeln derart angeordnet sind, dass sie den jeweiligen magnetischen Polen (N1, N2; S1, S2) der Rotoren (3N, 3S) über jeweilige Luftspalte gegenüber liegen,
**dadurch gekennzeichnet, dass**
die magnetischen N- und S-Pole (N1, N2; S1, S2) der Rotoren (3N, 3S) einander in axialer Richtung über den Stator (2) gegenüber liegen.

2. Generator, der die elektrische Drehvorrichtung nach Anspruch 1 umfasst, bei dem jeweilige Spulen (25A - 25D) des Stators (2) durch Drehen der Rotoren (3N, 3S) sägezahnförmige induktive elektromotorische Kräfte erzeugen, wenn die Drehwelle (1) durch eine Drehkraft angetrieben wird, und die durch die jeweiligen Spulen (25A - 25D) erzeugten induktiven elektromotorischen Kräfte aufgebaut werden, um als erzeugte Ausgabe nach außen geliefert zu werden.

3. Motor, der die elektrische Drehvorrichtung nach Anspruch 1 umfasst, bei dem die Drehwelle (1) durch eine abstoßende Kraft und eine absorptive Kraft gedreht wird, welche gleichzeitig zwischen den Magnetpolabschnitten (23A - 23D; 24A - 24D) an beiden Enden der Kerne (20A - 20D) auf dem Stator (2) und den jeweiligen magnetischen Polen (N 1, N2; S1, S2) der Rotoren (3N, 3S) erzeugt werden, indem man Strom durch die jeweiligen Spulen (25A - 25D) fließen lässt, wobei die Stromrichtung abwechselnd umgekehrt wird.

4. Motor nach Anspruch 3, wobei jeder Magnetpolabschnitt (23A - 23D; 24A - 24D) der jeweiligen Kerne (20A - 20D) auf dem Stator (2) so ausgebildet ist, dass beide Enden des Abschnitts unterschiedliche Gestalten annehmen, um zu bewirken, dass sich ein durch den Magnetpolabschnitt (23A - 23D; 24A - 24D) erzeugter Magnetfluss asymmetrisch zu einer Mittellinie davon verteilt.

## Revendications

1. Appareil électrique rotatif, comprenant :
un arbre rotatif (1) ;
un stator (2) disposé de manière à entourer la périphérie externe dudit arbre rotatif (1) ; et
une paire de rotors (3N, 3S) disposés de manière intégrale sur ledit arbre rotatif (1) sur les deux positions latérales dudit stator (2),
dans lequel
l'un desdits rotors comprend une pluralité de pôles (N1, N2) faisant face vers le stator (2), lesquels sont tous des pôles magnétiques N, et l'autre rotor comprend le même nombre de pôles (S1, S2) faisant face vers le stator (2), lesquels sont tous des pôles magnétiques S,
lesdits pôles magnétiques N et S (N1, N2 ; S1, S2) des rotors (3N, 3S) sont respectivement disposés à angles égaux,
ledit stator (2) comprend un certain nombre de noyaux (20A-20D) qui correspondent à deux fois le nombre desdits pôles magnétiques (N1, N2 ou S1, S2) de chaque rotor (3N ou 3S), des portions formant pôles magnétiques (23A-23D ; 24A-24D) formées aux deux extrémités de noyaux respectifs (20A-20D), et des bobines (25A-25D) bobinées sur des noyaux respectifs (20A-20D), et
lesdites portions formant pôles magnétiques (23A-23D ; 24A-24D) aux deux extrémités des noyaux de stator respectifs (20A-20D) sont respectivement disposées à des angles égaux dans une situation dans laquelle elles sont opposées auxdits pôles magnétiques respectifs (N1, N2 ; S1, S2) des rotors (3N, 3S) via des entrefers respectifs,
**caractérisé en ce que**
lesdits pôles magnétiques N et S (N1, N2 ; S1, S2) des rotors (3N, 3S) sont opposés les uns aux autres dans la direction axiale à travers ledit stator (2).

2. Générateur comprenant l'appareil électrique rotatif selon la revendication 1, dans lequel des bobines respectives (25A-25D) dudit stator (2) génèrent des forces électromotrices inductives en forme de dents de scie par la rotation desdits rotors (3N, 3S) quand ledit arbre rotatif (1) est entraîné par une force de rotation, et lesdites forces électromotrices inductives générées par des bobines respectives (25A-25D) sont synthétisées pour être fournies à l'extérieur sous forme de sorties générées.

3. Moteur comprenant l'appareil électrique rotatif selon la revendication 1, dans lequel ledit arbre rotatif (1) est mis en rotation par des forces de répulsion et des forces d'attraction qui sont simultanément générées entre lesdites portions formant pôles magnétiques (23A-23D ; 24A-24D) aux deux extrémités desdits noyaux (20A-20D) sur le stator (2) et des pôles magnétiques respectifs (N1, N2 ; S1, S2) des rotors (3N, 3S), en faisant s'écouler un courant à travers des bobines respectives (25A-25D), la direction du courant étant inversée alternativement.

4. Moteur selon la revendication 3, dans lequel chaque portion formant pôle magnétique (23A-23D ; 24A-24D) desdits noyaux respectifs (20A-20D) sur le stator (2) est ainsi formée que les deux extrémités de la portion adoptent des formes différentes, pour amener le flux magnétique généré par lesdites portions formant pôles magnétiques (23A-23D ; 24A-24D) à se distribuer asymétriquement par rapport à la ligne centrale de celles-ci.
